**Europäisches Patentamt**

**European Patent Office**

**Office européen des brevets**

(19)

(11) Veröffentlichungsnummer : **0 193 214 B2**

# (12) NEUE EUROPÄISCHE PATENTSCHRIFT

(45) Veröffentlichungstag der neuen Patentschrift :
**22.07.92 Patentblatt 92/30**

(51) Int. Cl.$^5$ : **F16C 33/28,** F16C 33/20,
F16C 33/04

(21) Anmeldenummer : **86200006.4**

(22) Anmeldetag : **04.01.86**

(54) Gleitlagerwerkstoff.

(30) Priorität : **16.02.85 DE 3505373**

(43) Veröffentlichungstag der Anmeldung :
**03.09.86 Patentblatt 86/36**

(45) Bekanntmachung des Hinweises auf die
Patenterteilung :
**26.10.88 Patentblatt 88/43**

(45) Bekanntmachung des Hinweises auf die
Entscheidung über den Einspruch :
**22.07.92 Patentblatt 92/30**

(84) Benannte Vertragsstaaten :
**DE FR GB IT SE**

(56) Entgegenhaltungen :
**EP-A- 0 040 448**
**FR-A- 2 383 779**
**US-A- 2 976 093**

(73) Patentinhaber : **KOLBENSCHMIDT**
**Aktiengesellschaft**
**Christian-Schmidt-Strasse 8/12 Postfach 1351**
**W-7107 Neckarsulm (DE)**

(72) Erfinder : **Bickle, Wolfgang**
**Friedenstrasse 15**
**W-6831 Reilingen (DE)**
Erfinder : **Pfoh, Rolf**
**Weinbergstrasse 10 a**
**W-6914 Rauenberg (DE)**
Erfinder : **Becker, Karl**
**Buchenweg 4**
**W-6837 St. Leon-Rot (DE)**

(74) Vertreter : **Rieger, Harald, Dr.**
**Reuterweg 14**
**W-6000 Frankfurt am Main (DE)**

EP 0 193 214 B2

Jouve, 18, rue Saint-Denis, 75001 PARIS

## Beschreibung

Die Erfindung betrifft einen folienartigen Gleitlagerwerkstoff mit einem aus einer Aluminium-Knetlegierung mit einer Bruchdehnung $\delta_5$ = 8 bis 20% und einer Brinell-Härte HB 35 bis 65 bestehenden Streckmetallgitter, das mit einem Gemisch aus 10 bis 30 Gew.-% eines die Wärmeleitfähigkeit und Verschleissfestigkeit verbessernden Füllstoffs, 10 bis 30 Gew.-% Glasfasern und 40 bis 80 Gew.-% Polytetrafluoräthylen (PTFE) gebildeten Beschichtung versehen ist.

Ein solcher aus der EP-A-0040448 bekannter folienartiger Gleitlagerwerkstoff, bei dem das Streckmetallgitter insbesondere aus einer Aluminium-Knetlegierung des Typs AlMgSi1 oder AlMg3 besteht und dessen Maschenweite bx1 = 0,5x1 bis 2x3 mm und dessen Stegbreite 0,3 bis 1,0mm betragen, zeichnet sich dadurch aus, dass er beliebige Schnitte oder Stanzungen erlaubt und eine vergleichsweise hohe Formstabilität besitzt, so dass er problemlos in der automatischen Lagerfertigung eingesetzt werden kann. Falls die auf den Stegen des Streckmetallgitters befindliche Schicht des PTFE/Blei/Glasfaser-Gemisches abgetragen ist, besitzt das Streckmetallgitter selbst sehr gute Notlaufeigenschaften.

Bei dem vorstehend beschriebenen folienartigen Gleitlagerwerkstoff kann sich im Bereich der Stellen, an denen es beim Umformen des Gleitlagerwerkstoffs zu Lagerelementen zur Ausbildung von Spannungsspitzen kommt, die aus dem PTFE/Blei/Glasfaser-Gemisch gebildete Beschichtung von dem Streckmetallgitter ablösen. Das hat zur Folge, dass sich beim Einsatz der Lagerelemente für Gleitlagerungen, die korrosiven Medien ausgesetzt sind, wie z. B. an den der Einwirkung von Streusalz unterliegenden Türscharnieren von Kraftfahrzeugen, Korrosionsbeläge auf dem Streckmetallgitter bilden, welche die mechanischtechnologischen Eigenschaften des Streckmetallgitters unkontrolliert verändern.

Aufgabe der vorliegenden Erfindung ist es, das Ablösen der aus dem PTFE/Füllstoff/Glasfaser-Gemisch gebildeten Beschichtung von dem Streckmetallgitter beim Umformen des Gleitlagerwerkstoffs zu Lagerelementen zu verhindern und damit örtliche Korrosionsangriffe zu vermeiden.

Die Lösung dieser Aufgabe besteht darin, dass die Oberfläche des Streckmetallgitters mit einer 2 bis 10 µm dicken Schicht eines Haftvermittlers überzogen ist, die aus Chromphosphat mit darin eingelagerten Teilchen aus PTFE, an die beim Sintern des PTFE/Füllstoff/Glasfaser-Gemisches die benachbarten PTFE-Teilchen dieses Gemisches ansintern, besteht. Dadurch wird die Haftfestigkeit der aus dem PTFE/Füllstoff/Glasfaser-Gemisch gebildeten Beschichtung erheblich verbessert und gleichzeitig eine bessere Verformbarkeit erzielt, so dass zusätzlich der Anwendungsbereich des folienartigen Gleitlagerwerkstoffs bedeutend erweitert ist.

Bei dem Verfahren zur Herstellung des folienartigen Gleitlagerwerkstoffs wird auf das aus einer Aluminium-Knetlegierung bestehende Streckmetallgitter nach der üblichen Vorbehandlung ein aus 90 bis 110 Gew.-Teilen PTFE-Dispersion, 10 bis 30 Gew.-Teilen Chromphosphat und 20 bis 50 Gew.-Teilen destilliertem Wasser zusammengesetztes Gemisch aufgetragen und anschliessend bei einer Temperatur von 230 bis 300°C 3 bis 8 min. lang getrocknet. Danach wird das PTFE/Füllstoff/Glasfaser-Gemisch aufgewalzt und bei einer Temperatur von 380 bis 410°C 4 bis 10 min. lang gesintert. Als Füllstoffe kommen insbesondere Blei, Molybdänsulfid, Bariumsulfat und Zinksulfid in Betracht.

Die Erfindung ist anhand eines Ausführungsbeispiels näher erläutert. Es wurde ein aus der Aluminium-Knetlegierung des Typs AlMgSil bestehendes Streckmetallgitter mit einer Zugfestigkeit $\delta_B$ = 25 N/mm², 0,2-Grenze $\delta_{0,2}$ = 13 N/mm², einer Bruchdehnung $\delta_5$ = 18 % und einer Brinell-Härte von HB = 70 verwendet, dessen Maschenweite 1 x 2 und die Stegbreite 0,5 mm betrugen. Das Streckmetallgitter wurde mit einer 2 bis 5µm dikken Haftvermittlerschicht in der Zusammensetzung 100 Gew.-Teile PTFE-Dispersion, 20 Gew.- Teile Chromphosphat, 45 Gew.-Teile destilliertes Wasser beschichtet und 5 min. lang bei 280°C getrocknet, nach dem Trocknen der Schicht ein Gemisch aus 20 Gew.-% Blei, 20 Gew.-% Glasfasern und 60 Gew.-% PTFE aufgewalzt und bei ca. 385°C 5 min lang gesintert. Die Haftfestigkeit der aus dem PTFE/Blei/Glasfaser-Gemisch gebildeten Beschichtung betrug 2,6 bis 3,0 N/mm², während die Haftfestigkeit für den gleichen Gleitlagerwerkstoff, jedoch ohne Haftvermittlerschicht, nur einen Wert von 1,14 bis 1,35 N/mm² erreichte.

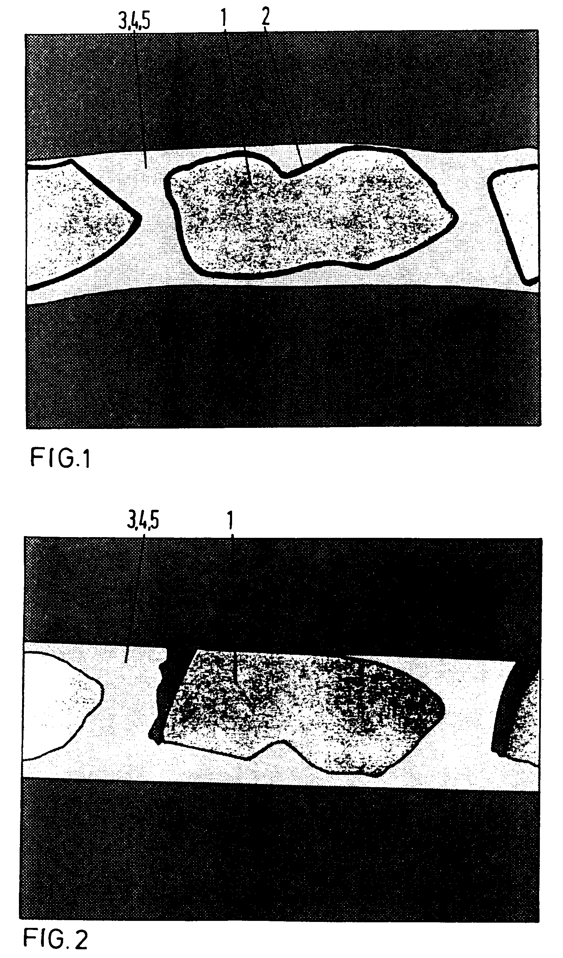

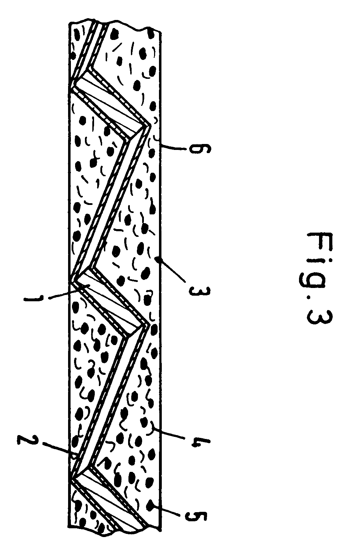

Aus dem erfindungsgemäss aufgebauten Gleitlagerwerkstoff sowie aus dem Gleitlagerwerkstoff ohne Verwendung eines Haftvermittlers wurden jeweils mehrere Bundlagerbuchsen geformt und der Salzsprühnebelprüfung nach DIN 50021 mit 96 h bzw. 244 h Belastungszeit unterworfen. Die ermittelten Ergebnisse zeigen eindeutig, dass der erfindungsgemässe Gleitlagerwerkstoff gemäss Schliffbild Fig. 1 in bezug auf Korrosionserscheinungen in salzhaltiger Atmosphäre der bisherigen Ausführung des Gleitlagerwerkstoffs ohne Haftvermittler gemäss Schliffbild Fig. 2 deutlich überlegen ist. Bei der Verwendung einer Haftvermittlerschicht (2) umschliesst die aus dem PTFE/Blei/Glasfaser-Gemisch (3, 4, 5) gebildete Beschichtung auch in den Bereichen, in denen beim Umformen Spannungsspitzen auftreten, das Streckmetallgitter (1) vollständig. Im Gegensatz dazu sind gemäss Fig.2 eine deutliche Ablösung der Beschichtung von den Stegen des Streckmetallgitters (1) ohne Haftvermittlerschicht (2) und weisse Korrosionsbeläge zu erkennen. In Fig.3 ist ein Querschnitt durch

2

den erfindungsgemäss gestalteten Gleitlagerwerkstoff dargestellt. Auf die Stege (1) des Streckmetallgitters ist eine Haftvermittlerschicht (2) beidseitig aufgetragen. Die Maschen des Streckmetallgitters sind mit dem aus PTFE-Teilchen (3), Glasfasern (4) und Bleipulver (5) bestehenden Gemisch in der Weise gefüllt, daß gleitseitig eine Gleitschicht (6) des Gemisches über den Spitzen der Stege (1) vorhanden ist.

**Patentansprüche**

1. Folienartiger Gleitlagerwerkstoff mit einem aus einer Aluminium-Knetlegierung mit einer Bruchdehnung $\delta_5$ = 8 bis 20 % und einer Brinell-Härte HB 35 bis 65 bestehenden Streckmetallgitter, das mit einem Gemisch aus 10 bis 30 Gew.-% eines die Wärmeleitfähigkeit und Verschleißfestigkeit verbessernden Füllstoffs, 10 bis 30 Gew.-% Glasfasern und 40 bis 80 Gew.-% Polytetrafluoräthylen (PTFE) gebildeten Beschichtung versehen ist, dadurch gekennzeichnet, daß die Oberfläche des Streckmetallgitters (1) mit einer 2 bis 10 μm dicken Schicht (2) eines Haftvermittlers, bestehend aus Chromphosphat mit darin eingelagerten PTFE-Teilchen, die an die benachbarten PTFE-Teilchen des PTFE/Füllstoff/Glasfaser-Gemisches (3,4, 5) angesintert sind, überzogen ist.

2. Verfahren zur Herstellung des Gleitlagerwerkstoffs nach Anspruch 1, dadurch gekennzeichnet, daß auf das vorbehandelte Streckmetallgitter beidseitig ein aus 90 bis 110 Gew.-Teilen PTFE-Dispersion, 10 bis 30 Gew.-Teilen Chromphosphat und 20 bis 50 Gew.-Teilen destilliertem Wasser bestehendes Gemisch aufgetragen, anschließend bei einer Temperatur von 230 bis 300°C 3 bis 8 min. lang getrocknet, dann das PTFE/Füllstoff/Glasfaser-Gemisch aufgewalzt und bei einer Temperatur von 380 bis 410°C 4 bis 10 min. lang gesintert wird.

**Claims**

1. Sheet-type sliding bearing material with an expanded metal mesh consisting of a wrought aluminium alloy with an elongation at break $\delta_5$ = 8 to 20% and a Brinell hardness number HB of 35 to 65, which is provided with a coating formed by a mixture of 10 to 30% wt. of a filler improving thermal conductivity and resistance to wear, 10 to 30% wt. glass fibres and 40 to 80% wt. polytetrafluoroethylene (PTFE), characterised in that the surface of the expanded metal mesh (1) is coated with a 2 to 10 μm-thick layer (2) of a coupling agent, consisting of chromium phosphate with PTFE particles embedded therein, which are sintered on to the adjacent PTFE particles of the PTFE/filler/glass fibre mixture (3, 4, 5).

2. Process for producing the sliding bearing according to Claim 1, characterised in that a mixture consisting of 90 to 110 parts by weight PTFE dispersion, 10 to 30 parts by weight chromium phosphate and 20 to 50 parts by weight distilled water is applied on both sides of the pre-treated expanded metal mesh, then dried for 3 to 8 minutes at a temperature of 230 to 300°C, then the PTFE/filler/glass fibre mixture is rolled on to the expanded metal mesh and sintered at a temperature of 380 to 410°C for 4 to 10 minutes.

**Revendications**

1. Matériau pour palier lisse, de type à feuille, comprenant une grille en métal déployé, en un alliage d'aluminium corroyé ayant un allongement à la rupture $\delta_5$ de 8 à 20% et une dureté Brinell HB de 35 à 65, qui est revêtue d'un mélange constitué de 10 à 30% en poids d'une charge améliorant la conductibilité thermique et la résistance à l'usure, de 10 à 30% en poids de fibres de verre et de 40 à 80% en poids de polytétrafluoroéthylène (PTFE), caractérisé en ce que la surface de la grille en métal déployé (1) est revêtue d'une couche (2) de 2 à 10 μm d'épaisseur, d'un adhésif constitué de phosphate de chrome avec des particules de PTFE incluses en son sein et qui sont frittées aux particules voisines de PTFE du mélange de PTFE, de charge et de fibres de verre (3, 4, 5).

2. Procédé de préparation d'un matériau pour palier lisse suivant la revendication 1, caractérisé en ce qu'il consiste à déposer sur la grille en métal déployé, qui a été pré-traitée, des deux côtés, un mélange constitué de 90 à 110 parties en poids d'une dispersion de PTFE, de 10 à 30 parties en poids de phosphate de chrome et de 20 à 50 parties en poids d'eau distillée, à sécher ensuite pendant 3 à 8 minutes à une température de 230 à 300°C, ensuite le mélange de PTFE est laminé sur la grille en métal déployé, et a fritter pendant 4 à 10 minutes à une température de 380 à 410°C.

FIG.1

FIG. 2

# Fig.3